# FASCICULE DE BREVET EUROPEEN

(11) **EP 1 001 564 B1**
(45) Date de publication et mention de la délivrance du brevet: **16.06.2004**
(21) Numéro de dépôt: 99402734.0
(22) Date de dépôt: 04.11.1999
(51) Int. Cl.: H04B 10/18

(54) **Equilibrage des collisions dans un système de transmission à fibre optique à signaux solitons**
Kollisionsausgleichung in einem Soliton-Übertragungssystem
Balancing of collisions in a soliton transmission system

(30) Priorité: 09.11.1998 FR 9814052
(43) Date de publication de la demande: 17.05.2000
(73) Titulaire: ALCATEL, 75008 Paris (FR)
(72) Inventeur: Leclerc, Olivier, 91240 Saint Michel S/Orge (FR); Desurvire, Emmanuel, 91680 Bruyères le Chatel (FR)
(74) Mandataire: Lamoureux, Bernard

(56) Documents cités:
- WO-A-98/36512
- US-A- 5 801 862
- SMITH N J ET AL: "SOLITON TRANSMISSION USING PERIODIC DISPERSION COMPENSATION" JOURNAL OF LIGHTWAVE TECHNOLOGY, vol. 15, no. 10, 1 octobre 1997 (1997-10-01), pages 1808-1822, XP000703596 ISSN: 0733-8724
- GRUDININ A B ET AL: "STRAIGHT LINE 10GBIT/S SOLITON TRANSMISSION OVER 1000KM OF STANDARD FIBRE WITH IN-LINE CHIRPED FIBRE GRATING FOR PARTIAL DISPERSION COMPENSATION" ELECTRONICS LETTERS, vol. 33, no. 18, 28 août 1997 (1997-08-28), page 1572/1573 XP000739591 ISSN: 0013-5194

## Description

La présente invention concerne les systèmes de transmission à fibre optique à multiplexage de longueurs d'onde et à signaux solitons. Elle concerne plus particulièrement le problème de la gigue temporelle provoquée par les collisions entre solitons dans un tel système.

La transmission d'impulsions solitons ou solitons dans la partie d'une fibre optique à dispersion anormale est un phénomène connu. Les solitons sont des signaux impulsionnels de forme sech². Avec cette forme d'impulsion, la non-linéarité dans la partie correspondante de la fibre compense la dispersion du signal optique. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optics Letters, vol. 11 n° 10 pages 665-667. Cet effet, appelé effet Gordon-Haus ou gigue Gordon-Haus, impose une limite théorique à la qualité ou au débit des transmissions par solitons. Pour arriver à dépasser cette limite, il est possible d'utiliser une modulation synchrone des signaux solitons, à l'aide de modulateurs semi-conducteurs ou tout optiques. Il a aussi été proposé des systèmes de filtres guidants glissants, permettant de contrôler la gigue des solitons transmis, voir par exemple EP-A-0 576 208. Il a aussi été proposé, pour assurer la régénération du signal sur la ligne, d'utiliser l'effet Kerr dans des modulateurs synchrones d'amplitude ou de phase, ou encore d'utiliser des absorbants saturables.

Par ailleurs, pour augmenter le débit des systèmes de transmission à fibre optique à signaux solitons, il a aussi été proposé d'utiliser un multiplexage de longueur d'onde (en anglais "wavelength division multiplexing ou WDM).

Dans ce cas, les collisions asymétriques entre les solitons des divers canaux provoquent une gigue temporelle gênante. Cette gigue est inhérente à l'utilisation d'amplificateurs discrets: les solitons des différents canaux du multiplex n'interagissent pas de la même façon à faible puissance- avant amplification - ou à fortes puissances après amplification -. Cette gigue temporelle existe tant pour les systèmes passifs, comme ceux utilisant des filtres guidants, que pour les systèmes actifs, par exemple à régénération synchrone.

Ce problème est exposé dans A. F. Evon et J. V. Wright, Constraints on the design of single channel high capacity (> 10 Gbit/s) solitons systems, IEEE Photonics Technology Letters, vol. 7 n°1, p. 117 (1995); cet article expose que le problème de la gigue Gordon Haus est le facteur limitant pour des systèmes transocéaniques utilisant des solitons à 10 Gbit/s; toutefois, pour des transmissions à plus haut débit, la distance de transmission ou la distance entre les amplificateurs sont limitées par les perturbations induites par l'amplification discrète. Cet article suggère l'utilisation de fibre à dispersion décroissante, ou d'amplification optique distribuée, qui pourraient localement compenser la dispersion et les non-linéarités de la fibre.

Un premier type de solution proposée consiste à corriger les pertes dans la fibre par une gestion appropriée de la dispersion. D.J. Richardson et al., Periodically amplified system based on loss compensating dispersion decreasing fiber, Electronics Letters, vol. 32 n° 4, p. 373 (1996) propose une configuration expérimentale d'une boucle à recirculation, utilisant comme fibre de ligne des fibres dont le profil de dispersion suit le profil des pertes. L'utilisation de fibre de ligne dont le profil de dispersion décroît exponentiellement entre les amplificateurs permet dans ce montage d'atteindre des distances de transmission de l'ordre de 266 km; le montage reste néanmoins limité par la gigue temporelle.

Un article de L. F. Mollenauer, et al., Wavelength Division Multiplexing with Solitons in Ultra long Distance Transmissions using Lumped Amplifiers, Journal of Lightwave Technology, vol. 9 no 3, pages 362-367 (1991) décrit le problème des collisions entre solitons dans les systèmes de transmission à multiplexage de longueur d'onde, et insiste notamment sur les variations de vitesse de propagation induites par les collisions; cet article explique que des variations de la dispersion chromatique de la fibre le long du chemin de transmission peuvent compenser les effets des collisions; il est en conséquence proposé d'utiliser des segments de dispersion différente, pour compenser les effets des collisions sur la vitesse de propagation des solitons.

Un article de A. Hasegawa, S. Kumar et Y. Kodoma, Reduction of Collision-induced time-jitter in Dispersion-managed Solitons Transmission Systems, Optics Letters, vol. 21 no 1, Janvier 1996, pages 39-41 propose un schéma de gestion des dispersion dans la fibre, permettant d'augmenter la distance entre les amplificateurs. Cette solution repose sur un profil de dispersion par paliers dans la fibre approchant autant que possible un profil idéal exponentiel.

W. Foryiak, F.M. Knox et N.J. Doran, Average Soliton propagation in periodically amplified systems with stepwise dispersion-profiled fiber, Optics Letters vol. 19 no 3, pp. 174-176 (1994) propose une autre méthode de calcul de paliers de dispersion pour la fibre de ligne d'un système de transmission en multiplexage de longueur d'onde à signaux solitons.

Ces solutions restent difficiles à mettre en oeuvre industriellement: il est nécessaire de produire de grandes quantités de fibre présentant un profil de dispersion spécifique, de concaténer des segments de 20 km, et de prévoir des épissures avec d'autres composants. La solution consistant à approximer le profil de dispersion exponentiel par des paliers de dispersion constante est soumise, du point de vue de la production, aux mêmes contraintes de gestion et d'assemblage des segments; en outre, les tolérances acceptables sur la dispersion et la longueur des segment diminuent rapidement lorsque le nombre de palier décroît.

Un autre type de solution consiste à utiliser une amplification distribuée le long de la fibre, voir par exemple L. F. Mollenauer et al., Soliton propagation in long fibers with periodically compensated loss, IEEE Journal of Quantum Electronics, vol. QE-22 n° 1, p. 157 (1986).

Enfin, il a aussi été proposé d'utiliser des amplificateurs très proches. L'article précité de L. F. Mollenauer et al. dans le Journal of Lightwave Technology, montre aussi que des solitons de différentes longueurs d'ondes sont transparents les uns pour les autres dans un système de transmission à amplification discrète, si la longueur de la collision, i. e. la distance que parcourent les solitons le long de la fibre lorsqu'ils se traversent - est gronde devant l'espacement des amplificateurs. Il est proposé dans cet article d'utiliser des amplificateurs discrets distants de 20 km. Cette solution est économiquement difficile à mettre en oeuvre.

Pour la transmission en multiplexage de longueurs d'ondes, un article de E. Desurvire, O. Leclerc et O. Audouin, Optics Letters, vol. 21, n° 14, pages 1026-1028 décrit un schéma d'allocation des longueurs d'ondes, qui soit compatible avec l'utilisation de modulateurs synchrones. Cet article propose d'allouer des longueurs d'ondes aux différents canaux du multiplex de telle sorte que, pour des intervalles Z_{R} donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français 9600732 du 23 janvier 1996 au nom de Alcatel Submarine Networks. Dons cet article, il est proposé de choisir un sous groupe de canaux, synchrones non seulement à des intervalles Z_{R}, mais aussi à des intervalles sous multiples de Z_{R}. D'autres aspects de cette technique d'allocation de longueur d'ondes sont décrits dans les articles de O. Leclerc, E. Desurvire et O. Audouin, Synchronous WDM Soliton Regeneration : Toward 80-160 Gbit/s Transoceanic Systems, Optical Fiber Technology, 3 pages 97-116 (1997) et de E. Desurvire et al., Transoceanic Regenerated Soliton Systems: Designs for over 100 Gbit/s Capacities, Suboptic '97, pages 438-447.

L'invention a pour objet une solution au problème de l'asymétrie des collisions entre solitons dans un système de transmission à multiplexage de longueurs d'onde. L'invention propose une solution simple, qui limite la gigue temporelle due aux collisions entre solitons. En outre, l'invention propose une solution compatible avec un schéma d'allocation des longueurs d'onde du type décrit dans l'article précité de O. Leclerc.

Plus précisément, l'invention propose un système de transmission à fibre optique et à signaux solitons en multiplex de longueurs d'onde, dans lequel les longueurs d'onde des différents canaux du multiplex sont choisies de sorte que les temps bit des différents canaux (λ₁ à λₙ) du multiplex sont sensiblement synchrones en au moins un point, comprenant un amplificateur audit point, et une section de fibre présentant une dispersion supérieure à la fibre de ligne du système de transmission après le dit amplificateur.

Avantageusement, la dispersion et la longueur de la dite section de fibre sont choisies de sorte à limiter la gigue de collision entre les solitons de canaux voisins.

De préférence, la dispersion et la longueur de la dite section de fibre sont choisies de sorte à rendre sensiblement égaux les effets de l'interaction entre deux solitons voisins de part et d'autre de l'amplificateur.

Dans un mode de réalisation, la section de fibre comprend de la fibre monomode.

De préférence, la section de fibre présente une valeur de dispersion au moins cinq fois supérieure à celle de la fibre de ligne.

Avantageusement, la section de fibre présente une valeur de dispersion au moins dix fois supérieure à celle de la fibre de ligne.

D'autres caractéristiques et avantages de l'invention apparaîtront à la lecture de la description qui suit de modes de réalisation de l'invention, donnée à titre d'exemple et en référence aux dessins annexés qui montrent:
- figure 1 un graphe des variations de la vitesse et de l'accélération d'un soliton dans un système de transmission à signaux solitons et à multiplexage de longueurs d'onde de l'art antérieur;
- figure 2 un graphe similaire à celui de la figure 1 pour un système de transmission selon l'invention;
- figure 3 un graphe de l'évolution des variations de la longueur d'onde d'un soliton sur un canal, en fonction de la distance, pour différentes valeurs de la longueur de fibre ajoutée;
- figure 4 un graphe de l'évolution des variations des longueurs d'onde de deux solitons en collision, en fonction de la distance;
- figure 5 un graphe de l'évolution des variations des longueurs d'onde sur deux canaux voisins, pour des séquences de solitons, en fonction de la distance.

L'invention s'applique à un système de transmission à fibre optique à signaux solitons; elle propose de compenser l'asymétrie de la collision, en ajoutant après les amplificateurs du système de transmission une fibre fortement dispersive. L'invention est décrite dans la suite en référence à un système en multiplex de longueur d'onde dans lequel les différentes longueurs d'onde du multiplex sont choisies de sorte à assurer, sur un intervalle donné, un glissement relatif entre les différents canaux sensiblement égal à un multiple du temps bit. Toutefois, elle n'est pas limitée à un système de transmission mettant en oeuvre un tel schéma d'allocation des fréquences, et s'applique plus généralement à tout système de transmission à signaux solitons à multiplexage de longueurs d'onde.

Dons l'exemple proposé, on peut utiliser les solutions d'allocation de longueurs d'onde décrits dans les articles de E. Desurvire et O. Leclerc mentionnés plus haut. Un tel schéma d'allocation de longueurs d'ondes assure, à intervalles réguliers Z_{R} le long de la fibre, un glissement relatif entre les différents canaux sensiblement égal à un multiple du temps bit.

Comme exposé plus haut, un problème rencontré dans un système de transmission à multiplexage de longueurs d'onde, et en particulier dans un système avec un tel schéma d'allocation des longueurs d'ondes, est que les collisions entre les signaux solitons dans les amplificateurs ou plus généralement dans tout dispositif asymétrique du système, induisent une variation de la fréquence des solitons; cette variation se traduit par une gigue temporelle à l'arrivée; le signe de la variation de fréquence dépend de la position spectrale relative des signaux solitons subissant la collision.

Plus précisément, comme la vitesse de propagation des solitons décroît avec la longueur d'onde, les solitons des différents canaux du multiplex se rattrapent et se traversent mutuellement. Du fait des non-linéarités de la fibre - effet Kerr ou mélange quatre ondes - de telles collisions induisent une perturbation sensible dans les longueurs d'onde des solitons et dans leur position temporelle; en fait, dans la première partie d'une collision, les solitons de canaux voisins s'attirent, et leur vitesse change progressivement, le soliton le plus rapide étant accéléré et le soliton le plus lent étant ralenti, en proportion des non-linéarités de la fibre. Dans la seconde partie de la collision, les solitons se repoussent, et les effets sont inversés, toujours en proportion de la non-linéarité de la fibre. Si la non linéarité de la fibre - qui est fonction de l'intensité - reste constante pendant l'interaction, les différences de vitesses s'annulent à la fin de la collision, ce qui provoque un retard identique et faible des deux solitons ayant interagi, et on qualifie la collision de "symétrique". En réalité, du fait des pertes dans la fibre, et de l'amplification périodique des signaux, la non linéarité n'est pas constante pendant la collision, ce qui induit une variation résiduelle de la fréquence ou de la vitesse. La collision est asymétrique, et son asymétrie est en proportion des variations de l'intensité du signal; il en résulte un déplacement temporel aléatoire des solitons, qui correspond à une gigue temporelle importante.

Les solutions de l'art antérieur consistaient à chercher à éliminer la cause de l'asymétrie de la collision, notamment en jouant sur la dispersion de la fibre le long du système de transmission de sorte à compenser par la dispersion les variations d'intensité pour assurer une non-linéarité constante. Au contraire, l'invention propose simplement de rétablir la symétrie de la collision. Dans le cas d'un schéma d'allocation des longueurs d'onde du type de celui évoqué plus haut, les temps bit des différents canaux du multiplex coïncident à intervalles réguliers, et des amplificateurs discrets peuvent être disposés aux points de coïncidence des temps bit. Pour une collision, les deux solitons qui interagissent sont donc superposés temporellement lors du passage dons un amplificateur. En d'autres termes, la première partie d'une collision s'effectue avant un amplificateur, et la seconde partie après un amplificateur.

L'invention propose donc de prévoir une section de fibre fortement dispersive en sortie des amplificateurs, de telle sorte à réduire la durée d'interaction des solitons pendant la deuxième partie de la collision, immédiatement après l'amplification. La longueur et la dispersion de la fibre sont choisies de telle sorte que les variations de vitesses avant et après l'amplification soient égales ou sensiblement égales. Autrement dit, l'invention propose de compenser les variations d'intensité des solitons provoquées par l'amplification en jouant sur la durée de la collision.

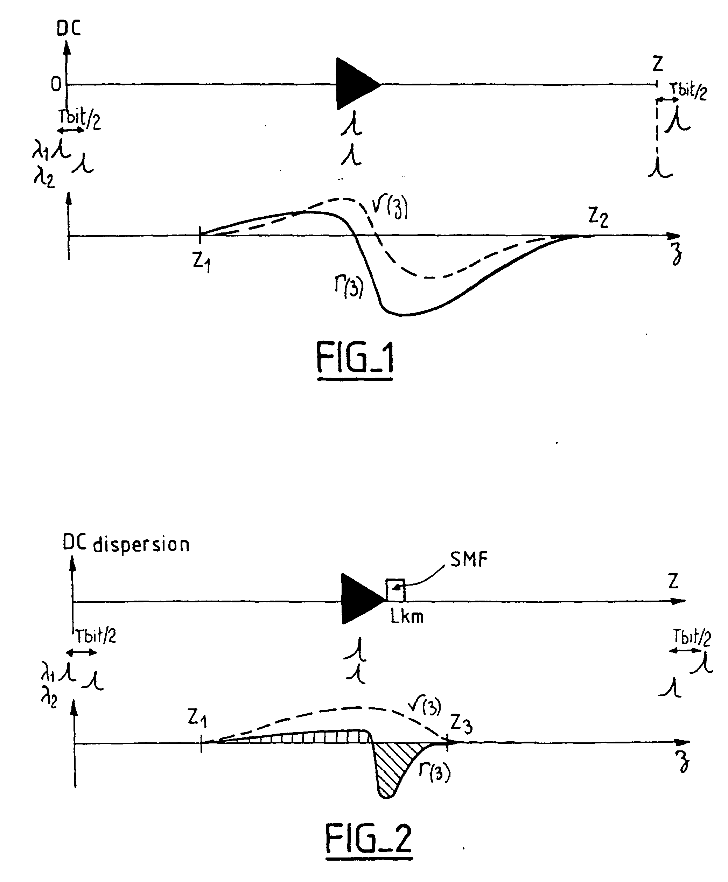

La figure 1 montre un graphe des variations de la vitesse et de l'accélération d'un soliton dans un système de transmission à signaux solitons et à multiplexage de longueurs d'onde de l'art antérieur; on a porté dans le haut du graphe de la figure 1 la dispersion chromatique DC en fonction de la distance z le long de la fibre de ligne, ainsi que la position de l'amplificateur. La dispersion est sensiblement constante. On a représenté sur la figure une section d'un système de transmission, centrée sur un amplificateur, et qui présente une longueur Z_{A} telle que le glissement relatif entre deux solitons de canaux voisins est égal à un temps bit T_{bit}; cette longueur Z_{A} correspond à l'espacement minimal possible entre deux amplificateurs successifs. De la sorte, sur la gauche de la figure, le décalage temporel entre deux solitons est de T_{bit}/2, et le soliton à la longueur d'onde λ₁ la plus faible est en retard par rapport au soliton à la longueur d'onde λ₂ la plus forte. Au niveau de l'amplificateur, les deux solitons sont synchronisés, et peuvent ainsi être amplifiés sans démultiplexage des canaux. Sur la droite de la figure, le décalage temporel entre deux solitons est de nouveau de T_{bit}/2, mois le soliton à la longueur d'onde λ₁ la plus faible est en avance par rapport au soliton à la longueur d'onde λ₂ la plus forte.

Sur le bas de la figure est portée, en fonction toujours de la distance de propagation z dans le système de transmission, la vitesse v(z) du soliton à la longueur d'onde λ₁, en traits interrompus, et l'accélération r(z) de ce soliton, en traits pleins. Les courbes montrent les variations de la vitesse et de l'accélération des solitons avant et après amplification, du fait des variations correspondantes de l'intensité.

La collision entre les deux solitons s'effectue en gros entre les distances z₁ et z₂, pour lesquelles les vitesses sont sensiblement égales à la vitesse moyenne. A partir de la distance z₁, le soliton à λ₁ est accéléré du fait de l'attraction par le soliton à λ₂; au delà de la distance z₂, les deux solitons sont de nouveaux suffisamment séparés pour que l'interaction entre les solitons soit négligeable. Une valeur couramment admise au delà de laquelle l'interaction est négligeable est de 0,2.Δt, où Δt est la largeur des solitons, classiquement pour une énergie égale à la moitié de l'énergie maximale (FWHM).

La figure 2 montre un graphe similaire à celui de la figure 1 pour un système de transmission selon l'invention; comme expliqué plus bas, et comme représenté schématiquement sur le haut de la figure, est disposée après l'amplificateur une section de fibre de longueur L, présentant une dispersion plus importante que la dispersion de la fibre de ligne du système de transmission. On peut choisir comme fibre de la fibre monomode ou fibre standard, avec une dispersion chromatique de l'ordre de 17 ps/nm.km à 1550 nm.

Le bas du graphe de la figure 2 montre les variations de la vitesse et de l'accélération du soliton à la longueur d'onde λ₁, en fonction de la distance. L'effet de la section de fibre à forte dispersion est de modifier les vitesse et accélération des solitons après l'amplification. Ces modifications ont pour effet d'augmenter le glissement entre les solitons de canaux voisins, de sorte à accélérer la séparation des deux solitons. La figure montre l'abscisse z₃ à partir de laquelle le soliton à la longueur d'onde λ₁ cesse en fait d'interagir avec le soliton à λ₂. La distance z₃ - z₁ sur la figure 2 est moins importante que la distance z₂ - z₁ sur la figure 1.

De la sorte, l'invention permet de réduire après l'amplification des solitons, la distance sur laquelle deux solitons de canaux voisins interagissent. On choisit la dispersion de la fibre optique ajoutée après l'amplificateur et la longueur L de cette fibre de sorte à ce que les effets de la collision sur les fréquences des solitons soient annulés ou limités. Il suffit pour cela que la surface hachurée verticalement sur la figure 2, sous la courbe de l'accélération Γ(z) avant l'amplification, soit égale à la surface hachurée obliquement sur la figure 2, au dessus de la courbe de l'accélération Γ(z) et après amplification. La première surface correspond à l'intégrale de l'accélération du soliton à λ₁ pendant la première moitié de la collision, autrement dit à la variation totale de la vitesse pendant la première moitié de la collision; comme expliqué plus haut, cette quantité est positive pour le soliton à λ₁, qui est accéléré. Inversement, la deuxième surface correspond à l'intégrale de l'accélération du soliton à λ₁ pendant la deuxième moitié de la collision, autrement dit à la variation totale de la vitesse pendant la deuxième moitié de la collision; cette quantité est négative pour le soliton à λ₁, qui est ralenti pendant la deuxième moitié de la collision.

La longueur de la section de la fibre et la dispersion chromatique de la fibre sont choisies de sorte à limiter les effets de la gigue temporelle. On peut procéder pour cela par test expérimental, par simulations numériques, ou encore par calcul analytique.

L'ajout d'une section de fibre de dispersion plus importante a pour effet de faire varier la dispersion moyenne. Il convient de prendre en compte cette variation de la dispersion pour calculer la distance entre les amplificateurs ou l'allocation des longueurs d'onde des différents canaux. On notera que les collisions, dans l'exemple qui précède, sont maintenues dans les amplificateurs à fibre, par un choix d'une longueur adéquate de fibre de dispersion plus importante; l'invention n'est toutefois pas limitée à ce cas particulier, et les collisions pourraient aussi se dérouler en dehors des amplificateurs. Le cas des collisions dans les amplificateurs représente du point de vue de la gigue de collision le pire cas.

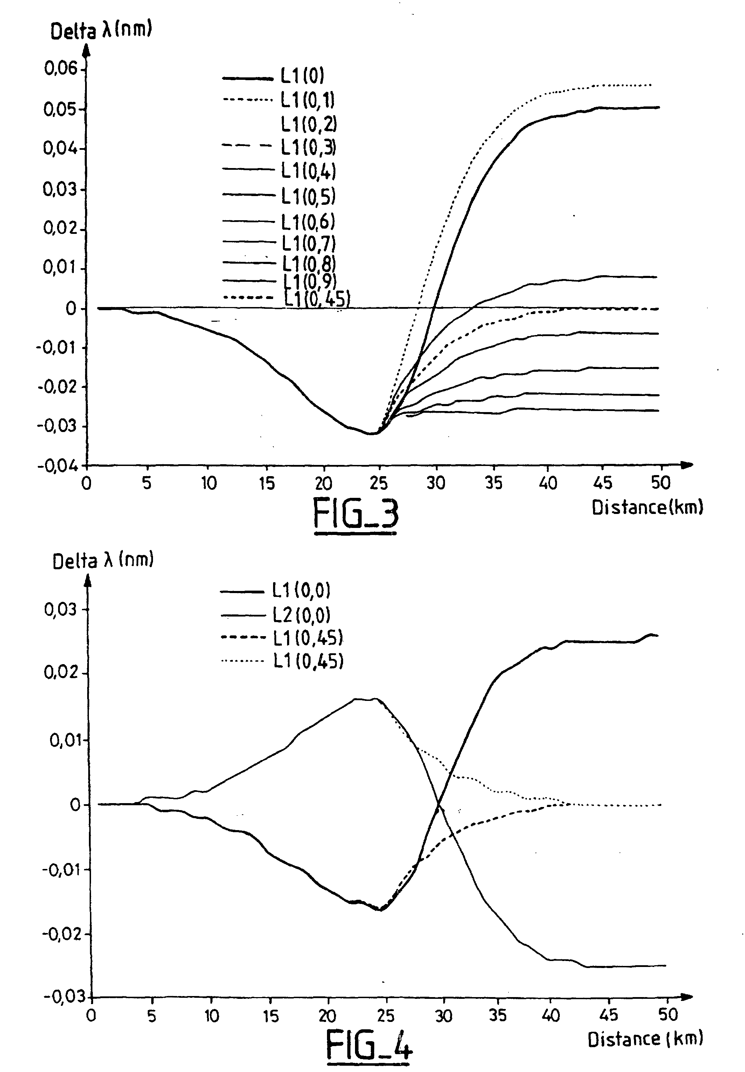

La figure 3 montre un graphe de l'évolution des variations de la longueur d'onde d'un soliton sur un canal, en fonction de la distance, pour différentes valeurs de la longueur de la fibre ajoutée; on a simulé à la figure 3 une collision entre deux solitons voisins de même phase.

On a utilisé pour la figure 3 les hypothèses suivantes:
- dispersion chromatique moyenne: 0,625 ps/nm.km;
- débit par canal: 20 Gbit/s;
- distance Z_{A} entre amplificateurs: 50 km;
- espacement entre canaux: 1,6 nm
- pertes dans la fibre : 0,22 nm/km.

En ordonnées est portée sur la figure la variation de longueur d'onde Δλ, en nm, et en abscisses est porté la distance de propagation en km; comme sur la figure 1, on a considéré une section de fibre d'une longueur Z_{A} de 50 km, avec un amplificateur placé au milieu de la section de fibre. La figure montre les variations de la longueur d'onde pour différentes valeurs possibles de la longueur de fibre de forte dispersion ajoutée; dans tous les cas, on a considéré de la fibre SMF d'une dispersion de 17 ps/nm.km à 1550 nm.

La figure montre en gras la variation de la longueur d'onde en l'absence de fibre selon l'invention. On constate que la variation de longueur d'onde est de l'ordre de 0,05 nm. Pour des valeurs de la longueur de fibre ajoutée inférieures à 0,45 km, la variation de longueur d'onde reste positive, ce qui traduit un effet plus important de l'interaction avec le soliton du canal voisin pendant la deuxième moitié de la collision; pour des longueurs de fibre ajoutée supérieures à 0,45 km, la variation de longueur d'onde est négative; autrement dit, l'effet de la fibre ajoutée est tel que l'interaction avec le soliton du canal voisin pendant la première moitié de la collision a un effet plus important que pendant la deuxième moitié de la collision.

Pour une valeur de la longueur de fibre ajoutée de 0,45 km, la variation de longueur d'onde provoquée par la collision s'annule. On arrive ainsi à ce que les effets de l'interaction entre les solitons pendant la première moitié de la collision soient sensiblement égaux aux effets de l'interaction entre les solitons pendant la deuxième moitié de la collision.

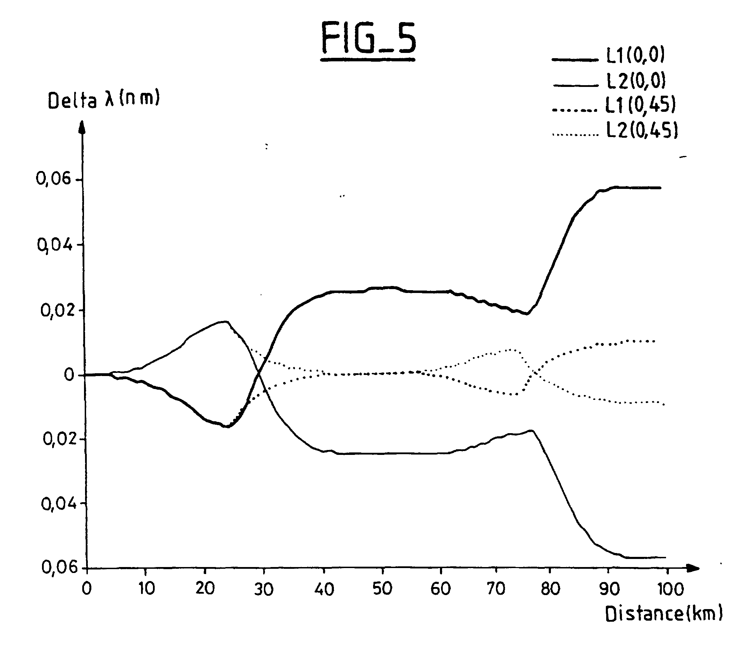

La figure 4 montre un graphe de l'évolution des variations des longueurs d'onde de deux solitons en collision, en fonction de la distance. Les unités sont les mêmes que sur la figure 3; toutefois, dans l'exemple de la figure 4 comme dans celui de la. figure 5, le train de soliton est codé, alors qu'il ne l'est pas dans le cas de la figure 3; ceci explique la différence entre les valeurs numériques des variations de longueurs d'onde. Sont représentées en traits continus les variations de la longueur d'onde dans un système de l'art antérieur; les traits interrompus montrent les variations dans un système de transmission selon l'invention, avec une longueur de fibre ajoutée de 0,45 km. On constate que les effets de l'interaction sur la première moitié de la collision - z compris entre 0 et 25 km - sont compensés par les effets de l'interaction sur la deuxième moitié de la collision; grâce à l'invention, les variations de longueur d'onde entre des deux canaux s'annulent. A titre de comparaison, en l'absence de compensation, les variations induites par la collision sont de l'ordre de 0,025 nm sur chaque canal, soit 3 GHz. De telles variations réduisent considérablement les performances du système de transmission.

La figure 5 montre un graphe de l'évolution des variations moyennes de longueur d'onde sur deux canaux voisins, pour des séquences de solitons, en fonction de la distance. Les unités et les conventions de représentation sont les mêmes que sur la figure 4; on a toutefois représenté à la figure 5 un système présentant deux amplificateurs séparés d'une distance Z_{A} de 50 km, soit à des abscisses z = 25 km et z = 75 km. On a simulé à la figure 5 le cas d'envoi sur chaque canal d'une séquence de 2⁷ solitons, qui présentent chacun une voleur de "0" ou de "1" équiprobable. Sont représentés les variations moyennes des longueurs d'onde pour l'ensemble de la séquence envoyée, pour chacun des deux canaux.

On retrouve sur la figure 5, entre les abscisses z = 0 et z = 50 km des résultats exactement similaires à ceux de la figure 4. Les effets du passage dans le second amplificateur sont différents, dans la mesure où la simulation ne prend pas en compte la variation résiduelle de position temporelle des solitons du fait des collisions. Comme expliqué plus haut, les solitons ayant interagi subissent dans une collision symétrique un retard identique et faible. Ce retard, avec les hypothèses du système de la figure 4, est de l'ordre de 1 ps; du fait de ce retard, le deuxième amplificateur de la figure 5, à z = 75 km n'est pas exactement au centre de la collision. On peut corriger cet effet, en déplaçant le deuxième amplificateur ou en changeant la longueur de fibre SMF en sortie de l'amplificateur, de sorte que les collisions autour du deuxième amplificateur soient effectivement centrées sur l'amplificateur. Autrement dit, l'invention propose avantageusement de tenir compte, pour la mise en place des amplificateurs du décalage temporel induit sur les solitons par les collisions. La correction dans ce cas est de l'ordre de -τ/D.Δλ km, soit de l'ordre de 1 km pour des valeurs de retard τ de l'ordre de 1 ps.

On constate en tout état de cause que l'invention permet de limiter les variations de longueur d'onde à près de 20% de la valeur obtenue en l'absence de compensation de la gigue. Un filtre glissant placé en sortie des amplificateurs, ou tous les N amplificateurs, avec N entier, peut aussi aider à corriger un peu plus la position des impulsions. La gigue dans un système de transmission selon l'invention peut ainsi être limitée.

Bien évidemment, l'invention n'est pas limitée aux modes de réalisation décrits à titre d'exemple. Le schéma d'allocation de longueurs d'onde n'est aucunement limité aux exemples décrits. Dans le mode de réalisation de la figure 2, on a représenté uniquement une section du système de transmission; il est possible de prévoir selon l'invention une section de fibre plus dispersive que la fibre de ligne après chaque amplificateur du système, ou seulement après certains d'entre eux. Dans les exemples de réalisations, la section de fibre à forte dispersion est disposée immédiatement après l'amplificateur: cette position est la plus avantageuse, dans la mesure où les effets de l'interaction entre solitons sont les plus sensibles là où l'intensité des solitons est maximale. On pourrait aussi disposer la section de fibre plus en aval dans le système de transmission, le cas échéant avec une section de fibre plus importante.

Il fout aussi noter que l'invention a été décrite dans le cas le plus simple d'un système de transmission dont la fibre de ligne présente une dispersion constante. Elle peut aussi être mise en oeuvre dans un système de transmission avec des dispersions en palier, par exemple pour réduire le nombre de paliers nécessaires.

Enfin, l'invention a été décrite dans le cas d'amplificateurs discrets; elle pourrait aussi être appliquée à un système de transmission avec des amplificateurs distribués, ou à un système de transmission comprenant à la fois des amplificateurs distribués et des amplificateurs discrets.

## Revendications

1. Système de transmission à fibre optique et à signaux solitons en multiplex de longueurs d'onde, dans lequel les longueurs d'onde des différents canaux du multiplex sont choisies de sorte que les temps bit des différents canaux (λ₁ à λₙ) du multiplex sont sensiblement synchrones en au moins un point, comprenant un amplificateur audit point, et une section de fibre présentant une dispersion supérieure à la fibre de ligne du système de transmission après le dit amplificateur.

2. Système de transmission selon la revendication 1, **caractérisé en ce que** la dispersion et la longueur de la dite section de fibre sont choisies de sorte à limiter la gigue de collision entre les solitons de canaux voisins.

3. Système de transmission selon la revendication 1, **caractérisé en ce que** la dispersion et la longueur de la dite section de fibre sont choisies de sorte à rendre sensiblement égaux les effets de l'interaction entre deux solitons voisins de part et d'autre de l'amplificateur.

4. Système de transmission selon l'une des revendications 1 à 3, **caractérisé en ce que** la section de fibre comprend de la fibre monomode.

5. Système de transmission selon l'une des revendications 1 à 4, **caractérisé en ce que** ladite section de fibre présente une valeur de dispersion au moins cinq fois supérieure à celle de la fibre de ligne.

6. Système de transmission selon l'une des revendications 1 à 5, **caractérisé en ce que** ladite section de fibre présente une valeur de dispersion au moins dix fois supérieure à celle de la fibre de ligne.

## Claims

1. An optical fibre transmission system using wavelength division multiplexed soliton signals, in which system the wavelengths of the channels of the multiplex are chosen so that the bit times of the channels (λ₁ to λₙ) of the multiplex are substantially synchronous at one point at least, the system comprising an amplifier at said point and a section of fibre having a dispersion higher than the line fibre of the transmission system downstream of said amplifier.

2. A transmission system according to claim 1, **characterised in that** the dispersion and the length of said section of fibre are chosen to limit collision jitter between solitons on adjacent channels.

3. A transmission system according to claim 1, **characterised in that** the dispersion and the length of said section of fibre are chosen to render substantially equal the effects of the interaction between two adjacent solitons on either side of the amplifier.

4. A transmission system according to any of claims 1 to 3, **characterised in that** said section of fibre consists of monomode fibre.

5. A transmission system according to any one of claims 1 to 4, **characterised in that** said section of fibre has a dispersion value at least five times greater than that of the line fibre.

6. A transmission system according to any one of claims 1 to 5, **characterised in that** said section of fibre has a dispersion value at least ten times greater than that of the line fibre.

## Patentansprüche

1. Glasfaser-Übertragungssystem mit Solitonsignalen im Wellenlängenmultiplex-Betrieb, bei dem die Wellenlängen der verschiedenen Kanäle des Multiplex so gewählt werden, dass die Bitzeiten der verschiedenen Kanäle *(λ*₁ bis λₙ) des Multiplex an mindestens einem Punkt deutlich synchron sind, wobei dieses System an diesem Punkt über einen Verstärker verfügt und eine Faserstrecke aufweist, die nach dem genannten Verstärker eine stärkere Dispersion als die Leitungsfaser des Übertragungssystems besitzt.

2. Übertragungssystem gemäß Anspruch 1, **dadurch gekennzeichnet, dass** die Dispersion und die Länge der genannten Faserstrecke so gewählt werden, dass der Kollisionsjitter zwischen den Solitonen nebeneinander liegender Kanäle begrenzt wird.

3. Übertragungssystem gemäß Anspruch 1, **dadurch gekennzeichnet, dass** die Dispersion und die Länge der genannten Faserstrecke so gewählt werden, dass die Effekte der Wechselwirkung zwischen zwei benachbarten Solitonen auf beiden Seiten des Verstärkers deutlich angeglichen werden.

4. Übertragungssystem gemäß einem der Ansprüche 1 bis 3, **dadurch gekennzeichnet, dass** die Faserstrecke eine Monomode-Faser umfasst.

5. Übertragungssystem gemäß einem der Ansprüche 1 bis 4, **dadurch gekennzeichnet, dass** die Faserstrecke einen Dispersionswert aufweist, der mindestens fünfmal höher als derjenige der Leitungsfaser ist.

6. Übertragungssystem gemäß einem der Ansprüche 1 bis 5, **dadurch gekennzeichnet, dass** die Faserstrecke einen Dispersionswert aufweist, der mindestens zehnmal höher als derjenige der Leitungsfaser ist.
